# EUROPEAN PATENT SPECIFICATION

(11) **EP 2 784 488 B1**
(45) Date of publication and mention of the grant of the patent: **03.01.2018**
(21) Application number: 12850794.4
(22) Date of filing: 01.11.2012
(51) Int. Cl.: G01N 21/65, G01N 21/03, G01N 21/09

(54) **REACTION VESSEL FOR RAMAN SPECTROPHOTOMETRY, AND RAMAN SPECTROPHOTOMETRY METHOD USING THE SAME**
REAKTIONSGEFÄSS FÜR RAMAN-SPEKTROPHOTOMETRIE UND RAMAN-SPEKTROPHOTOMETRIEVERFAHREN DAMIT
CUVE DE RÉACTION POUR SPECTROPHOTOMÉTRIE RAMAN ET PROCÉDÉ DE SPECTROPHOTOMÉTRIE RAMAN UTILISANT CELLE-CI

(30) Priority: 25.11.2011 JP 2011257849
(43) Date of publication of application: 01.10.2014
(73) Proprietor: National University Corporation Gunma University, Maebashi-shi, Gunma 371-8510 (JP); Nisshinbo Holdings Inc., Tokyo 103-8650 (JP)
(72) Inventor: OZAKI, Jun-ichi, Kiryu-shi Gunma 376-8515 (JP); KANNARI, Naokatsu, Kiryu-shi Gunma 376-8515 (JP); HORIKAWA, Yuta, Kiryu-shi Gunma 376-8515 (JP); KOBAYASHI, Rieko, Chiba-shi Chiba 267-0056 (JP); SAITO, Naoto, Chiba-shi Chiba 267-0056 (JP)
(74) Representative: Vossius & Partner Patentanwälte Rechtsanwälte mbB
(86) International application number: PCT/JP2012/078386
(87) International publication number: WO 2013/077166

(56) References cited:
- WO-A1-2009/136963
- WO-A1-2011/034533
- DE-U1- 20 012 374
- JP-A- 2006 343 133
- JP-A- 2007 172 917
- JP-A- 2008 164 584
- JP-A- 2010 101 772
- US-A- 6 015 479
- DURNIE W H ET AL: "In situ SERS study of the adsorption of inhibitors of carbon dioxide corrosion", SURFACE AND INTERFACE ANALYSIS, HEYDEN AND SON, LONDON, GB, vol. 35, 2003, pages 536-543, XP002516014, ISSN: 0142-2421, DOI: 10.1002/SIA.1567
- JINGLEI LEI, FRANK MCLARNON, AND ROBERT KOSTECKI: "In Situ Raman Microscopy of Individual LiNi0.8Co0.15Al0.05O2Particles in a Li-Ion Battery Composite Cathode", J. PHYS. CHEM. B, vol. 109, no. 2, 8 December 2004 (2004-12-08), pages 952-957, XP002740084, USA DOI: 10.1021/jp046027c
- NORIO NAKAMURA ET AL.: 'Analysis of Corrosion Process of the Steel for Gas Pipeline with in- situ Raman Spectroscopy' THE JOURNAL OF THE SURFACE FINISHING SOCIETY OF JAPAN vol. 57, no. 11, 01 November 2006, pages 793 - 798, XP008173456

## Description

### Technical Field.

The present invention relates to a reaction vessel for Raman spectrophotometry and a Raman spectrophotometry method using the same, and more particularly, to Raman spectrophotometry under an electrochemical reaction.

### Background Art

A chemical reaction in which a solid surface is involved relates to various important applications in industrial aspects, such as batteries, catalysts, coating, fine particle formation, corrosion, sensors, and the like. However, a reaction situation of the chemical reaction that takes place at the solid surface is hard to study, compared to a uniform reaction system that takes place in a solution or in a gas.

For this reason, laser Raman spectroscopy is employed. Laser Raman spectroscopy is a method for estimating a chemical structure of a molecule by measuring an oscillation state of the molecule. Unlike infrared spectroscopy that provides similar information, laser Raman spectroscopy has an advantage in that a measurement is possible even in a solution including a water solution. Therefore, with laser Raman spectroscopy, a chemical reaction process at a solid surface surrounded by a solution can be tracked at a molecular level (for example, see Non Patent Literature 1) ; [NPL 1] Surface Technology Vol. 57 (2006), No. 11, pp 793-798.

DURNEI W H et al: "In situ SERS study of the adsorption of inhibitors of carbon dioxide corrosion", SURFACE AND INTERFACE ANALYSIS, HEYDEN AND SON, LONDON, GB, vol. 35, 1 January 2003 (2003-01-01), pages 536-543, XP002516014, ISSN:0142-2421, DOI: 10.1002/SIA.1567 relates to electrochemical cell for an in-situ spectroelectrochemical surface-enhanced Raman spectroscopy (SERS) study of the adsorption of inhibitors of carbon dioxide corrosion onto a corroding steel substrate. SERS-active inhibitors are used in order to prevent corrosion of the steel surface, i.e. to render the steel electrochemically inactive in the electrolyte. For enhancing the intensity of Raman scattering, silver islands are deposited on the steel surface for the SERS; gold or copper may also be used. A microscope is used for the Raman spectroscopic measurements.

WO 2009/136963 A1 relates to a method in the operators for surface-enhanced Raman spectroscopy in which an effect of a first substance on the behaviour of a second substance is analysed by exposing a test material to the first substance, performing a first surface enhanced Raman spectroscopy analysis of the test material, while it is exposed to the first substance, exposing the test material to the first substance and to the second substance, and performing a second surface enhanced Raman spectroscopy analysis of the test material, while it is exposed to the first substance and to the second substance. Results of the first and second analysis are compared to indentify a change in the behaviour of the first substance.

US 6 015 479 A relates to an electrochemical cell comprising a cell body having a sample chamber, a working electrode fitted through the cell body and extending into the sample chamber; a counter electrode extending through the cell body into the sample chamber; a reference electrode extending through the cell body into the sample chamber; a window which fits over the cell body; and a cap threaded to the cell body for sealing the window against the cell body.

JP 2008 164584 A relates to a Raman spectrometer including a sample cell, a scattering device arranged so as to be in contact with a sample in the sample cell, for irradiating measuring light to a sample contacting surface and thereby generating Raman scattering light, a measurement light irradiation optical system for irradiating the measuring light to the sample contacting surface of the Raman scattering device, and a detecting unit for detecting the Raman scattering light. The device performs measurement by filling or flowing down the sample including the object substance that has electrophoresis or is previously adjusted so as to have electrophoresis, in the sample cell, and includes a voltage applying unit for electrophoresing the object substance in the sample to the sample contacting surface of the device via the sample cell.

WO 2011/034533 A1 relates to an electrically driven device for surface enhanced Raman spectroscopy including a first electrode, a substrate positioned proximate to the first electrode, a plurality of cone-shaped protrusions formed integrally with or on a substrate surface, a Raman signal-enhancing material coated on each protrusion, and a second electrode positioned relative to the first electrode at a predetermined distance. Each of the protrusions has a tip with a particular radius of curvature. The second electrode is positioned relative to the first electrode such that the electrodes together produce an electric field when a voltage bias is applied there between.

JINGLEI LEI, FRANK MCLARNON, and ROBERT KOSTECKI: "In Situ Raman Microscopy of Individual LiNi0.8Co0.15A10.05O2 Particles in a Li-Ion Battery Composite Cathode", J. PHYS. CHEM. B, vol. 109, no. 2, 8 December 2004 (2004-12-08), pages 952-957, USA DOI: 10.1021/jp046027c relates to an in-situ Raman spectroscopy of a Li-ion battery cathode in an electrochemical cell. The working electrode comprises graphite and carbon black.

DE 200 12 374 U1 relates to a spectroelectrochemical cell comprising two flat windows that form a circular reaction chamber, the reaction chamber is surrounded by a circuit board and the circuit board forms a retainer for electrochemical electrodes, namely a counter electrode, a working electrode, and a reference electrode, which protrude through the sidewalls of the reaction chamber.

JP 2007 172917 A relates to a photoelectric transducer which is provided with a working electrode having a porous oxide semiconductor layer carrying a sensitized dye, a counter electrode to function as a window electrode, and an electrolyte layer installed at least at one part between the working electrode and the counter electrode. The working electrode has electrode faces which are arranged mutually directed to different directions and which are composed of two faces or more of electrochemically coupled flat faces or curved faces, and in which the counter electrode is arranged directed to the respective electrode faces.

However, when an electrochemical reaction of a sample is performed at a solid surface in an electrolyte solution, for example, it is preferred for a member which can affect the electrochemical reaction, such as a wiring line for electrically connecting a working electrode and an external power source, to not exist in the electrolyte solution in a reaction vessel storing the electrolyte solution and the sample.

The present invention has been achieved in view of the above aspects, and it is one of the objects of the present invention to provide a reaction vessel for Raman spectrophotometry and a Raman spectrophotometry method using the same, which are suitable for an electrochemical reaction at a solid surface in an electrolyte solution.

### Solution to Problem

The invention is defined in claims 1 and 3. In order to achieve the above-mentioned object, there is provided a Raman spectrophotometry system according to claim 1. Additionally, in order to achieve the above-mentioned object, there is provided a Raman spectrophotometry method according to claim 3. Further, in the above-mentioned method, the Raman spectrophotometry may be microscopic Raman spectrophotometry. In this case, the microscopic Raman spectrophotometry may be performed in a situation where the reaction vessel is arranged between a lens for radiating excitation light and a microscope stage arranged facing the lens.

### Advantageous Effects of Invention

According to one embodiment of the present invention, a reaction vessel for Raman spectrophotometry and a Raman spectrophotometry method using the same, which are suitable for the electrochemical reaction at the solid surface in the electrolyte solution, are provided.

### Brief Description of Drawings

FIG. 1 is an explanatory diagram illustrating an example of a reaction vessel for Raman spectrophotometry according to an embodiment of the present invention in a perspective view.
FIG. 2 is an explanatory diagram illustrating the reaction vessel for Raman spectrophotometry illustrated in FIG. 1 in a planar view.
FIG. 3 is an explanatory diagram illustrating a cross section of the reaction vessel for Raman spectrophotometry taken along the line III-III illustrated in FIG. 2.
FIG. 4 is an explanatory diagram illustrating a cross section of the reaction vessel for Raman spectrophotometry taken along the line IV-IV illustrated in FIG. 2.
FIG. 5 is an explanatory diagram illustrating an example of performing microscopic Raman spectrophotometry by using the reaction vessel for Raman spectrophotometry illustrated in FIG. 4.
FIG. 6 is an explanatory diagram showing an example of a cyclic voltammogram obtained in Example according to the embodiment of the present invention.
FIG. 7 is an explanatory diagram showing an example of Raman spectra obtained in Example according to the embodiment of the present invention.
FIG. 8 is an explanatory diagram showing an example of a result of evaluating an intensity of a D band (1,358 cm⁻¹) in the Raman spectra shown in FIG. 7.

### Description of Embodiment

An exemplary embodiment of the present invention is described below. It should be noted that the present invention is not limited to examples described in the embodiment.

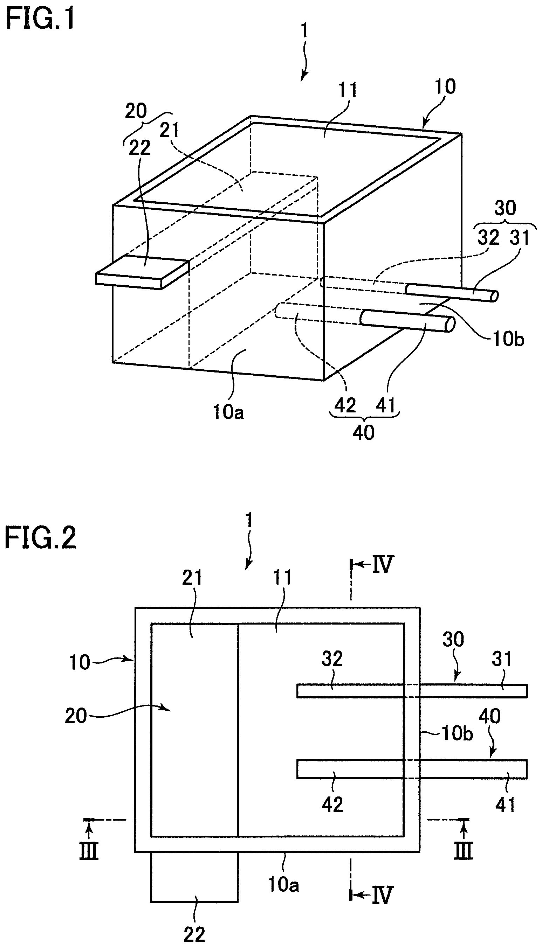

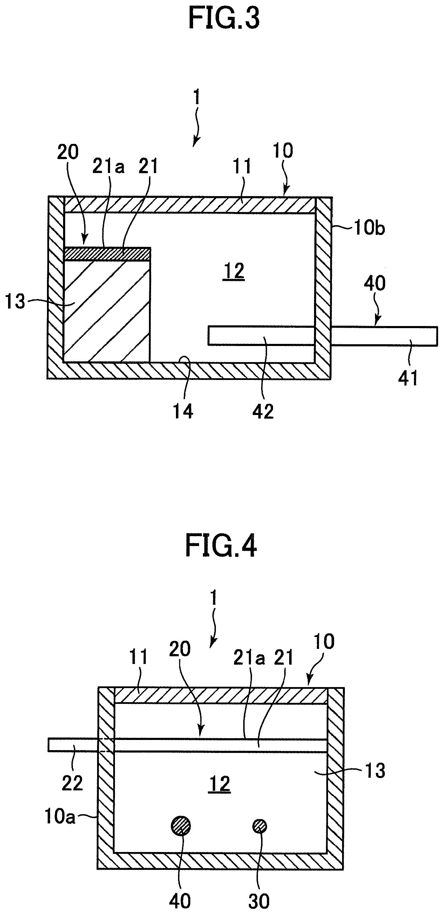

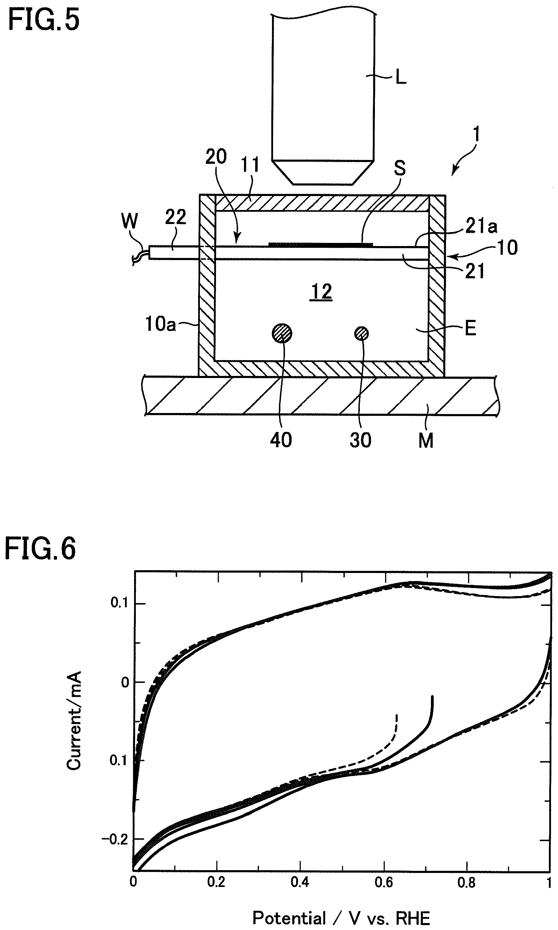

FIG. 1 is an explanatory diagram illustrating an example of a reaction vessel for Raman spectrophotometry according to this embodiment (hereinafter referred to as "present reaction vessel 1") in a perspective view. FIG. 2 is an explanatory diagram illustrating the present reaction vessel 1 illustrated in FIG. 1 in a planar view. FIG. 3 is an explanatory diagram illustrating a cross section of the present reaction vessel 1 taken along the line III-III illustrated in FIG. 2. FIG. 4 is an explanatory diagram illustrating a cross section of the present reaction vessel 1 taken along the line IV-IV illustrated in FIG. 2. FIG. 5 is an explanatory diagram illustrating an example of performing microscopic Raman spectrophotometry by using the present reaction vessel 1.

As illustrated in FIGS. 1 to 5, reaction vessel 1 includes: a housing portion 10 including a transparent window portion 11, in which a hollow portion 12 for storing an electrolyte solution E is formed; and a working electrode portion 20 configured from a conductive material that is electrochemically inactive in the electrolyte solution E and including one part (hereinafter referred to as "sample stage part 21") arranged facing the window portion 11 in the hollow portion 12 to hold a sample S, and another part (hereinafter referred to as "extended part 22") extended to outside the housing portion 10 to be connected to an external power source.

The present reaction vessel 1 is used for Raman spectrophotometry of an electrochemical reaction at a solid surface (specifically, a surface 21a of the sample stage part 21 of the working electrode portion 20 facing the window portion 11) in the electrolyte solution E. The electrochemical reaction is not particularly limited as long as the electrochemical reaction takes place at the solid surface in the electrolyte solution E, and for example, the electrochemical reaction may be a redox reaction. Further, the present reaction vessel 1 may also be used for Raman spectrophotometry in, for example, an electrochemical polymerization process, a crystal deposition process, an electrical reaction process, an electrochemical synthesis process, a sensor reaction process, and a biochemical reaction process.

Further, the electrochemical reaction may be, for example, a heterogeneous catalyst reaction. That is, in this case, a sample S containing a heterogeneous catalyst is used. More specifically, the sample S containing the heterogeneous catalyst is held on the sample stage part 21 of the working electrode portion 20 of the present reaction vessel 1. The Raman spectrophotometry is then performed in the electrolyte solution E on the heterogeneous catalyst reaction (for example, a catalytic redox reaction by the heterogeneous catalyst) on the sample stage part 21 of the working electrode portion 20.

The heterogeneous catalyst is not particularly limited, but for example, at least one catalyst selected from a group consisting of carbon catalyst, immobilized catalyst such as metal catalyst, metal compound catalyst, and the like, and immobilized biomolecule (biomolecule working as immobilized sensor) such as immobilized antigen, immobilized antibody, immobilized nucleic acid, immobilized enzyme, and the like may be used. As the carbon catalyst, for example, a carbon catalyst configured from a carbonized material obtained by carbonizing a raw material including an organic substance and a metal (preferably transition metal) and exhibiting a redox reaction catalytic activity (for example, an oxygen reduction reaction catalytic activity) may be used.

The electrolyte solution E is not particularly limited as long as an electrochemical reaction of the sample S proceeds in the electrolyte solution E. That is, pH of the electrolyte solution E is not limited, and thus an acidic electrolyte solution E may be used or an alkaline electrolyte solution E may be used. Further, as the electrolyte solution E, a corrosive electrolyte solution may also be used.

When the electrolyte solution E is acidic, the pH thereof may be, for example, from 0 to 5. The acidic electrolyte solution E may be selected from, for example, a group consisting of a mineral acid such as sulfuric acid, nitric acid, hydrochloric acid, or perchloric acid, a super strong acid, an organic acid, an organic electrolyte, a buffer, and an ionic liquid.

The housing portion 10 is abox-shaped hollow member that stores therein at least the electrolyte solution E and the sample stage part 21 of the working electrode portion 20. In the example illustrated in FIGS. 1 to 5, the housing portion 10 is formed as a cuboid member with a hollow inside.

A material constituting the housing portion 10 is not particularly limited as long as the material is an insulatingmaterial, and for example, at least onematerial selected from a group consisting of a resin, a metal coated with an insulating liner, a ceramic, and glass may be used.

When the corrosive electrolyte solution E (for example, an acidic electrolyte solution E) is used, it is preferred that the housing portion 10 be configured from a corrosion-resistant material. In this case, as the resin, there may be preferably used, for example, at least one material selected from a group consisting of a vinyl chloride resin, a phenol resin, a polyolefin resin (such as polyethylene and/or polypropylene), an acrylic resin, afluororesin, and a silicone resin.

The window portion 11 constitutes a part of an outer wall of the housingportion 10, through which excitation light (laser) passes in the Raman spectrophotometry. In the example illustrated in FIGS. 1 to 5, the window portion 11 is a plate-shaped member configured from a transparent material. The material constituting the window portion 11 is not particularly limited as long as the material has a transparency for allowing passage of the excitation light, and for example, at least one material selected from a group consisting of glass (preferably silica glass), a transparent synthetic resin, and a transparent ceramic may be used. A thickness of the window portion 11 is not particularly limited as long as the thickness is in a range where the Raman spectrophotometry can be performed.

The hollow portion 12 is a space formed inside the housing portion 10 for storing therein the electrolyte solution E. It is preferred that the hollow portion 12 is a sealed space at least at the time of performing the Raman spectrophotometry.

The working electrode portion 20 includes the sample stage part 21 arranged inside the hollow portion 12 of the housing portion 10 and the extended part 22 extended to outside the housing portion 10.

A shape of the working electrode portion 20 is not particularly limited as long as the shape is in a range where the Raman spectrophotometry can be performed on the electrochemical reaction using the working electrode portion 20 as a working electrode, and for example, the working electrode portion 20 may be a member that extends parallel to the window portion 11 (for example, a plate-shaped member illustrated in FIGS. 1 to 5).

In this case, because the sample stage part 21 and the extended part 22 are formed as one part and another part of the member extending parallel to the window portion 11, a height of the present reaction vessel 1 (particularly a height of the housing portion 10) is effectively reduced. A thickness of the working electrode portion 20 is not particularly limited.

The conductive material constituting the working electrode portion 20 is a material having conductivity and being electrochemically inactive in the electrolyte solution E. The fact that the conductive material is electrochemically inactive includes, for example, that the conductive material is not dissolved when a potential is applied to the conductive material, and that the conductive material does not exhibit an electrolysis of a solvent (electrolyte solution) in contact with the conductive material in a broad potential range. That is, the conductive material is, for example, a conductive material that is electrochemically inactive in the electrolyte solution E in a range from -0.2 V to 1.2 V (vs. NHE) regardless of pH of the electrolyte solution E.

The conductive material is not particularly limited as long as the conductive material is electrochemically inactive in the electrolyte solution E, and for example, at least one material selected from a group consisting of a conductive carbon material, a conductive ceramic, gold, and a gold-plated conductive material may be used.

The conductive carbon material is not particularly limited as long as the conductive carbon material is a carbon material having conductivity, and for example, at least one material selected from a group consisting of glass-type carbon, isotropic carbon, and a graphite material (for example, HOPG) may be used. The conductive ceramic is not particularly limited as long as the conductive ceramic is a ceramic material having conductivity, and for example, at least one material selected from a group consisting of titanium oxide, tin oxide, and indium tin oxide (ITO) may be used.

The sample stage part 21 is a part of the working electrode portion 20 arranged facing the windowportion 11 in the hollow portion 12 of the housing portion 10. The sample S is held on the surface 21a of the sample stage part 21 facing the window portion 11. In the example illustrated in FIGS. 1 to 5, the surface 21a is formed as a planar surface. A distance between the window portion 11 and the sample stage part 21 is not particularly limited as long as the distance is in a range where the Raman spectrophotometry can be performed.

The extended part 22 is a part of the working electrode portion 20, which is different from the sample stage part 21, arranged protruding from an outer surface 10a of the housing portion 10. That is, the extended part 22 is formed by causing a part of the working electrode portion 20 to penetrate through the housing portion 10 from inside the hollow portion 12, and extending the part to outside the housing portion 10.

More specifically, for example, when the working electrode portion 20 is a member that extends parallel to the window portion 11, the extended part 22 is formed by extending a part of the member to outside the housing portion 10 parallel to the window portion 11. In the example illustrated in FIGS. 1 to 5, the extended part 22 is formed by exposing one end part of the plate-shaped member constituting the working electrode portion 20 to outside the housing portion 10.

At the time of performing the Raman spectrophotometry, the extended part 22 is electrically connected to the external power source. That is, in the example illustrated in FIG. 5, the extended part 22 is connected to the external power source (not shown) via a wiring W.

The present reaction vessel 1 includes the extended part 22 that is formed by extending a part of the working electrode portion 20 to outside the housing portion 10 as a terminal for connecting to the external power source, and hence it is not necessary to arrange the wiring W for establishing an electrical connection to the external power source in the electrolyte solution E.

Therefore, existence of a member that affects the electrochemical reaction in the electrolyte solution E in the present reaction vessel 1 is effectively reduced. In addition, a structure of the present reaction vessel 1 is simplified.

In related-art microscopic Raman spectrophotometry, when a reaction vessel to be used cannot be arranged in a small space between an objective lens and a microscope stage of a commercially available microscopic Raman spectrophotometry system, it has been necessary to modify the microscopic Raman spectrophotometry system when performing the microscopic Raman spectrophotometry. However, the present reaction vessel 1 has the above-mentioned structure, and hence the height thereof is effectively reduced, compared to the related-art reaction vessel for Raman spectrophotometry.

Therefore, the present reaction vessel 1 is preferably used for the microscopic Raman spectrophotometry. That is, as illustrated in FIG. 5, the present reaction vessel 1 is arranged in a small space between a lens L for radiating the excitation light and a microscope stage M arranged facing the lens L in the microscopic Raman spectrophotometry system. Accordingly, by employing the present reaction vessel 1, for example, the microscopic Raman spectrophotometry is performed by using the commercially available microscopic Raman spectrophotometry system as it is without modifying the system.

In addition, as illustrated in FIGS. 1 to 5, the present reaction vessel 1 may further include a counter electrode 30 and a reference electrode 40. As the counter electrode 30, for example, a platinum (Pt) electrode may be used. As the reference electrode 40, for example, a silver/silver chloride (Ag/AgCl) electrode may be used.

In the example illustrated in FIGS. 1 to 5, one end part 32 of the counter electrode 30 and one end part 42 of the reference electrode 40 are arranged inside the hollow portion 12 to be immersed in the electrolyte solution E, and another end part 31 of the counter electrode 30 and another end part 41 of the reference electrode 40 are extended to outside the housing portion 10 to be connected to the external power source.

Further, the end part 31 of the counter electrode 30 and the end part 41 of the reference electrode 40 may be protruded from another outer surface 10b formed in a direction different from the outer surface 10a of the housing portion 10 through which the extended part 22 of the working electrode portion 20 is protruded (in the example illustrated in FIGS. 1 to 5, a direction orthogonal to the outer surface 10a). That is, in the example illustrated in FIGS. 1 to 5, the extended part 22 of the working electrode portion 20 is protruded from the outer surface 10a of the housing portion 10, and the end part 31 of the counter electrode 30 and the end part 41 of the reference electrode 40 are protruded from the other surface 10b of the housing portion 10 orthogonal to the outer surface 10a.

In addition, as illustrated in FIGS. 1 to 5, the housing portion 10 further includes a rack portion 13 that supports the working electrode portion 20 from the opposite side to the window portion 11, and a bottom portion 14 that faces the window portion 11 while being separated from the window portion 11 by a distance larger than a distance between the working electrode portion 20 and the window portion 11.

Therefore, in the hollow portion 12, the working electrode portion 20 may be arranged close to the window portion 11, and more electrolyte solution E may be stored in a space between the window portion 11 and the bottom portion 14 than in a space between the window portion 11 and the working electrode portion 20. Further, in the example illustrated in FIGS. 1 to 5, the one end part 32 of the counter electrode 30 and the one end part 42 of the reference electrode 40 are arranged between the window portion 11 and the bottom portion 14.

A Raman spectrophotometry method according to this embodiment (hereinafter referred to as "present method") is a method of performing Raman spectrophotometry by using the above-mentioned present reaction vessel 1. That is, the present method includes: preparing a reaction vessel (present reaction vessel 1) including the housing portion 10 including the window portion 11, in which the hollow portion 12 for storing the electrolyte solution E is formed, and the working electrode portion 20 configured from the conductive material that is electrochemically inactive in the electrolyte solution E and including one part (sample stage part 21) arranged facing the window portion 11 in the hollow portion 12 and another part (extended part 22) extended to outside the housing portion 10; holding the sample S on the sample stage part 21; connecting the extended part 22 to the external power source; storing the electrolyte solution E in the hollow portion 12; and performing the Raman spectrophotometry of the electrochemical reaction of the sample S in the electrolyte solution E.

Here a case where the microscopic Raman spectrophotometry is performed as illustrated in FIG. 5 is described. That is, in this example, the present reaction vessel 1 is arranged between the lens L for radiating the excitation light and the microscope stage M arranged facing the lens L, and then the microscopic Raman spectrophotometry is performed.

Specifically, as illustrated in FIG. 5, the present reaction vessel 1 is placed on the microscope stage M such that the window portion 11 faces the lens L (the sample S faces the lens L via the window portion 11). As the microscopic Raman spectrophotometry system including the lens L and the microscope stage M, a commercially available system may be used.

A method of holding the sample S on the sample stage part 21 is not particularly limited as long as the sample S is fixed on the surface 21a of the sample stage part 21. That is, for example, the sample S may be fixed on the surface 21a by using a method of applying slurry that contains the sample S on the surface 21a of the sample stage part 21 with use of a binder (for example, Nafion (trade mark)) or a method of directly depositing the sample S on the surface 21a of the sample stage part 21.

A method of connecting the extended part 22 to the external power source is not particularly limited as long as the extended part 22 is electrically connected to the external power source. That is, for example, as illustrated in FIG. 5, the extended part 22 may be electrically connected to the external power source by attaching the wiring W, which is electrically connected to the external power source, to the extended part 22.

The external power source is not particularly limited as long as the external power source applies a potential to the working electrode portion 20, and for example, a potentiostat may be preferably used.

Storing of the electrolyte solution E in the hollow portion 12 is not particularly limited as long as the sample stage part 21 of the working electrode portion 20 is immersed in the electrolyte solution E. That is, for example, the sealed hollow portion 12 may be filled with the electrolyte solution E in such a manner that a gaseous phase is not substantially formed in the hollow portion 12.

In the Raman spectrophotometry, firstly, a potential is applied from the external power source to the working electrode portion 20 via the extended part 22, to thereby start the electrochemical reaction of the sample S held on the sample stage part 21. The sample S is then irradiated with the excitation light from the lens L of the Raman spectrophotometry system via the window portion 11, and Raman-scattered light emitted in response to the electrochemical reaction of the sample S on the surface 21a of the sample stage part 21 is guided to an optical system of the Raman spectrophotometry system in a backward scattering mode, to thereby obtain the Raman spectra.

In this manner, in the present method, in-situ Raman spectrophotometry (in the example illustrated in FIG. 5, in-situ microscopic Raman spectrophotometry) of the electrochemical reaction at the solid surface (surface 21a of the sample stage part 21) in the electrolyte solution E is effectively performed by using the present reaction vessel 1. That is, for example, when the sample S contains a heterogeneous catalyst, a process of the heterogeneous catalyst reaction at the solid surface in the electrolyte solution E is observed in situ.

Specific Examples according to this embodiment are described below.

### Example 1

### [Preparation of carbon catalyst]

As the heterogeneous catalyst, a carbon catalyst configured from a carbonized material obtained by carbonizing a raw material including an organic substance and a metal was prepared.

Firstly, the raw material to be carbonized was prepared. That is, phenol resin (for fiber spinning, manufactured by Gun Ei Chemical Industry Co., Ltd.) and cobalt phthalocyanine (90% purity, manufactured by Tokyo Chemical Industry Co., Ltd.) were mixed in acetone such that a weight percentage of cobalt with respect to the phenol resin was 3 wt%. The obtained mixture was stirred by an ultrasonic wave for 30 minutes, and the solvent was removed by using an evaporator. Thereafter, the mixture was dried under reduced pressure for a night at a temperature of 70°C, and thus the raw material was obtained.

Subsequently, the raw material was carbonized. That is, the raw material of 1 g was placed on a silica boat, and the silica boat was placed at the center of a silica reaction tube (φ23.5 mm×600 mm). A high-purity nitrogen gas was then purged in the silica reaction tube at a flow rate of 500 mL/min for 20 minutes. Thereafter, the silica reaction tube was heated under the flow of the high-purity nitrogen gas (500 mL/min) by using an infrared image furnace (RHL410P, manufactured by Shinku-Riko. Inc.), and the temperature thereof was raised up to 1,000°C at a temperature rise rate of 10°C/min. The silica reaction tube was then maintained at 1, 000 °C for an hour to carbonize the raw material, and thus the carbonized material was obtained.

The carbonized material was pulverized by using a mortar, the pulverized carbonized material of 500mg and 10 pulverizing balls were inserted in a vessel, and a pulverizing process was further performed at a rotation speed of 750 rpm for 90 minutes by using a planetary ball mill. Thereafter, the pulverized carbonized material was sifted by using a sifter having a screen size of 106 µm, and the carbonized material that passed through the sifter was collected.

The carbonized material, a concentrated hydrochloric acid, and a stirrer were put into a vial and stirred for two hours by using a magnetic stirrer, and a suction filtration was further performed. This operation was repeated three times, and then the carbonized material was dried under reduced pressure for a night at a temperature of 80 °C. The dried carbonized material was finally obtained as the carbon catalyst. It has been confirmed that this carbon catalyst exhibits a redox catalytic activity such as an oxygen reduction catalytic activity.

### [Assembly of reaction vessel]

Firstly, slurry containing the carbon catalyst (catalyst slurry) was prepared. That is, about 5.0 mg of the carbon catalyst was put into a plastic vial. Subsequently, glass beads (BZ-1, φ0.991 mm to φ1. 397 mm, manufactured by AS ONE Corporation) of one spoonful of microspatula, 50 µL of 5% Nafion (trade mark) dispersed solution, 150 µL of ethanol (special grade reagent), and 150 µL of ultrapure water were added in the vial. The obtained composition was treated for 15 minutes by using an ultrasonic wave, and then the catalyst slurry was obtained.

Subsequently, the catalyst slurry was applied on the sample stage part 21 of the working electrode portion 20. As the working electrode portion 20, a plate-shaped member of the glass-type carbon (30 mm×10 mm×0.5 mm, manufactured by Nisshinbo Chemical Inc.) was used. The catalyst slurry of 19.8 µL was applied on the surface 21a of the sample stage part 21, which is a part on one end side of the glass-type carbon plate, and the applied catalyst slurry was dried in a desiccator under a wet condition, to thereby fix the sample S containing the carbon catalyst on an area of 1.4 cm² range of the surface 21a.

The present reaction vessel 1 illustrated in FIGS. 1 to 5 was then manufactured. That is, firstly, the housing portion 10 was prepared, which was a cuboid member (25 mm × 25 mm × 25 mm). The housing portion 10 included the window portion 11 configured from a silica glass plate having a thickness of 1 mm, and the hollow portion 12 was formed in the housing portion 10 so that the electrolyte solution E was stored in the hollow portion 12. Portions of the housing portion 10 other than the window portion 11 were configured from a vinyl chloride resin.

The working electrode portion 20 on which the sample S was held in the above manner, the counter electrode 30 (Pt line), and the reference electrode 40 of Ag/AgCl (RE-3VP, screw-in reference electrode, manufactured by BAS Inc.) were then mounted on the housing portion 10 as illustrated in FIGS. 1 to 5.

The hollow portion 12 of the housing portion 10 was filled with the electrolyte solution E (sulfuric acid aqueous solution, 0.5MH₂SO₄) in such a manner that a gaseous phase was not formed in the hollow portion 12, and then the hollow portion 12 was sealed. Before filling the electrolyte solution E in the hollow portion 12 of the present reaction vessel 1, dissolved oxygen in the electrolyte solution E was purged by performing bubbling of a nitrogen gas for 30 minutes.

The distance between the window portion 11 and the sample stage part 21 of the working electrode portion 20 was 2 mm. That is, a layer of the electrolyte solution E having a thickness of 2 mm was formed between the window portion 11 and the sample stage part 21. In addition, the present reaction vessel 1 was designed such that the sample S fixed on the sample stage part 21 of the working electrode portion 20 was arranged at a focal position of an optical system included in the commercially available microscopic laser Raman spectrophotometry system to be described later.

### Example 2

### [Cyclic Voltammetry]

In order to confirm that the present reaction vessel 1 prepared in the above manner works normally as an electrochemical device, cyclicvoltammetry (CV) was performed by using a potentiostat (ALS700 series electrochemical analyzer, manufactured by BAS Inc.). As the electrolyte solution E, a sulfuric acid solution (0.5MH₂SO₄) with nitrogen saturated was used.

A cyclic voltammogram was then obtained by performing a CV measurement with an initial potential set to a natural potential, a scanning range set to 0 V to 1.0 V (vs. NHE), a scanning speed set to 50 mV/s, and the number of cycles set to 5 cycles.

For comparison, as a related-art method, cyclic voltammetry was performed under a similar condition except that a three-electrode type electrochemical cell was used as a substitute for the present reaction vessel 1. Specifically, the catalyst slurry of 4 µL prepared in the same manner as the above-mentioned Example 1 was applied on a disk electrode (glassy carbon, φ6 mm) and dried in a desiccator under a wet condition. After drying, this disk electrode was mounted on a rotary ring disk electrode measurement device. The sulfuric acid aqueous solution (0.5MH₂SO₄) was used as the electrolyte solution, a reversible hydrogen electrode (RHE) was used as the reference electrode, and a carbon electrode was used as the counter electrode. Before mounting the disk electrode on the measurement device, bubbling of a nitrogen gas was performed for 30 minutes on the electrolyte solution in the electrolyte cell. Thereafter, acyclic voltammogram was obtained by performing a CV measurement with an initial potential set to a natural potential, a scanning range set to 0 V to 1.0 V (vs. NHE), a scanning speed set to 50 mV/s, and the number of cycles set to 5 cycles by using the potentiostat (ALS700 series electrochemical analyzer, manufactured by BAS Inc.).

The obtained cyclic voltammogram is shown in FIG. 6. In FIG. 6, a solid line indicates a result obtained by using the present reaction vessel 1 and a dashed line indicates a result obtained by using the related-art method. As shown in FIG. 6, by using the present reaction vessel 1, substantially the same cyclic voltammogram as the one obtained by using the related-art method was obtained.

Although it is omitted from drawing, chronoamperometry by using the present reaction vessel 1 also obtained substantially the same result as the one obtained by using the related-art method. That is, it was confirmed that the present reaction vessel 1 worked normally as an electrochemical device.

### Example 3

### [Raman spectrophotometry]

In-situ microscopic laser Raman spectrophotometry was performed by using a commercially available microscopic laser Raman spectrophotometry system (microscopic laser Raman system Nicolet Almega XR, manufactured by Thermo Fisher Scientific Inc.) and the present reaction vessel 1.

That is, the present reaction vessel 1 prepared in the above manner was arranged just below an objective lens (corresponding to the lens L illustrated in FIG. 5) and on a sample stage (corresponding to the microscope stage M illustrated in FIG. 5) in an optical microscope included in the microscopic laser Raman spectrophotometry system. Because the present reaction vessel 1 had a sufficiently low height, the present reaction vessel 1 was used without modifying the above-mentioned commercially available microscopic laser Raman spectrophotometry system.

The in-situ microscopic Raman spectrophotometry of the electrochemical reaction was then performed in a backward scattering mode by connecting the present reaction vessel 1 to a potentiostat, starting an electrochemical reaction in the electrolyte solution E by maintaining a potential at 2.0 V (vs. NHE), and irradiating the sample S with the excitation light (laser) via the window portion 11.

As an excitation light source, an Ar laser having a wavelength of 532 nm was used. An output of the excitation light was set to be 2 mW at the surface of the sample S. As the objective lens, a long focal-length lens having a magnification of 50 times was used. An exposing time period was set to 60 seconds, the number of times of exposing was set to 4, the number of times of background exposing was set to 16, and an aperture was set to a pin hole of 25 µm. The measurement was performed at six points on the sample S that were selected at random.

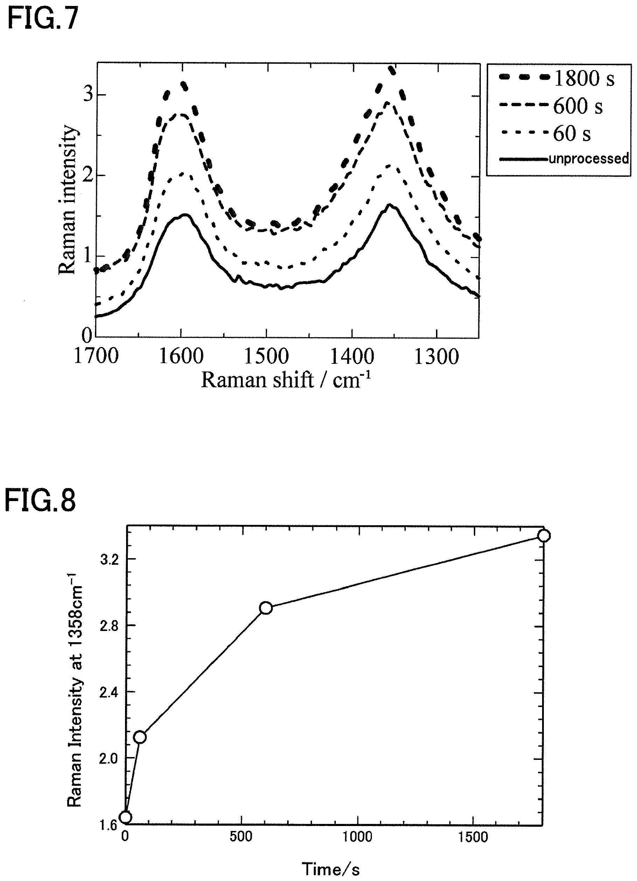

The obtained Raman spectra are shown in FIG. 7. In FIG. 7, a solid line (unprocessed) indicates a result obtained in a state in which the potential was not applied, a dotted line (60s) indicates a result obtained at a time when the potential was maintained for 60 seconds, a dashed line (600s) indicates a result obtained at a time when the potential was maintained for 600 seconds, and a thick dashed line (1800s) indicates a result obtained at a time when the potential was maintained for 1,800 seconds.

As shown in FIG. 7, two Raman bands of Raman shift were detected in a range from 1, 700 cm⁻¹ to 1,250 cm⁻¹. Both of the two Raman bands are caused by a carbon structure (i.e., a carbon structure of the carbon catalyst contained in the sample S), and a band having a peak top near 1, 350 cm is referred to as a D band and a band having a peak top near 1, 600 cm⁻¹ is referred to as a G band. Intensities of the two Raman bands were increased with time for which the potential was maintained.

A result of evaluating the intensity of the D band (peak intensity at 1,358 cm⁻¹) in the Raman spectra shown in FIG. 7 is shown in FIG. 8. In FIG. 8, the horizontal axis represents a time (sec) for which the potential is maintained and the vertical axis represents the intensity of the D band. As shown in FIG. 8, the intensity of the D band was 1.64 before applying the potential, became 2.13 after 60 seconds from the start of the potential application, became 2.91 after 600 seconds, and became 3.34 after 1, 800 seconds. That is, the intensity of the D band was increased with time until the time for which the potential was maintained reached 1,800 seconds.

It is considered that the temporal increase of the intensity of the Raman band, which is unique to such a carbon structure, reflects a process in which the carbon structure of the carbon catalyst contained in the sample S is oxidized in the electrolyte solution E. That is, in general, a Raman activity is increased as the crystallinity of the carbon structure is increased and a larger Raman peak is obtained, and hence it is considered that, for example, a portion where the crystallinity is low in the carbon structure of the carbon catalyst is decreased due to the oxidation and a portion where the crystallinity is high is increased, so that the Raman activity is increased.

Further, for example, when the carbon catalyst is oxidized due to the application of the potential in the electrolyte solution E, the carbon catalyst is taken out from the electrolyte solution E, and its carbon structure is analyzed, it is not possible to discriminate whether the oxidation of the analyzed carbon structure is due to the application of the potential or due to contact with air after the carbon catalyst is taken out from the electrolyte solution.

In contrast to this, in this embodiment, because the change of the carbon structure of the carbon catalyst due to the application of the potential in the electrolyte solution E is analyzed by in-situ Raman spectrophotometry, the Raman spectra is obtained as a useful result which directly reflects the oxidation process due to the application of the potential.

## Claims

1. A Raman spectrophotometry system comprising a reaction vessel and means for detecting a Raman shift, the reaction vessel comprising:
a housing (10) including side walls and a transparent window (11), wherein a hollow space (12) for storing an electrolyte solution is formed inside the housing (10), said hollow space being enclosed by said side walls and said transparent window (11); and
a working electrode (20) configured from a conductive material including at least one material selected from a group consisting of a conductive carbon material, a conductive ceramic, gold, and a gold-plated conductive material, the working electrode (20) being a plate-shaped member that extends parallel to the transparent window (11) and the working electrode (20) including:
one part (21) facing the transparent window (11) in the hollow space (12) and being configured to hold a sample on which Raman spectrophotometry in an electrochemical reaction of the sample in the electrolyte solution is performed; and
another part (22) being one end part of the plate-shaped member, penetrating a side wall of the housing (10) and extending parallel to the window (11) to outside the housing (10) to be connected to an external power source.

2. Use of a reaction vessel according to claim 1 for microscopic Raman spectrophotometry in a Raman spectrophotometry system comprising said reaction vessel and means for detecting a Raman shift, the reaction vessel comprising:
a housing (10) including side walls and a transparent window (11), wherein a hollow space (12) for storing an electrolyte solution is formed inside the housing (10), said hollow space being enclosed by said side walls and said transparent window (11); and
a working electrode (20) configured from a conductive material including at least one material selected from a group consisting of a conductive carbon material, a conductive ceramic, gold, and a gold-plated conductive material, the working electrode (20) being a plate-shaped member that extends parallel to the transparent window (11) and the working electrode (20) including:
one part (21) facing the transparent window (11) in the hollow space (12) and being configured to hold a sample on which Raman spectrophotometry in an electrochemical reaction of the sample in the electrolyte solution is performed; and
another part (22) being one end part of the plate-shaped member, penetrating a side wall of the housing (10) and extending parallel to the window (11) to outside the housing (10) to be connected to an external power source.

3. A Raman spectrophotometry method, comprising:
preparing a reaction vessel including:
a housing (10) including side walls and a transparent window (11) wherein a hollow space (12) is enclosed by said side walls and said transparent window (11); and
a working electrode (20) configured from a conductive material including at least one material selected from a group consisting of a conductive carbon material, a conductive ceramic, gold, and a gold-plated conductive material, the working electrode (20) being a plate-shaped member that extends parallel to the transparent window (11) and the working electrode (20) including one part (21) facing the transparent window (11) in the hollow space (12) and another part (22) being one end part of the plate-shaped member, penetrating a side wall of the housing and extending parallel to the window (11) to outside the housing (10);
holding a sample on the one part (21) of the working electrode (20) facing the transparent window (11);
connecting the other part (22) of the working electrode (20) extending to outside the housing (10) to an external power source;
storing an electrolyte solution in the hollow space (12); and
performing Raman spectrophotometry in an electrochemical reaction of the sample in the electrolyte solution.

4. The Raman spectrophotometry method according to claim 3, wherein the Raman spectrophotometry is microscopic Raman spectrophotometry.

5. The Raman spectrophotometry method according to claim 4, wherein the microscopic Raman spectrophotometry is performed in a situation where the reaction vessel is arranged between a lens for radiating excitation light and a microscope stage facing the lens.

## Patentansprüche

1. System zur Raman-Spektralphotometrie, das ein Reaktionsgefäß und Mittel zur Detektion einer Raman-Verschiebung aufweist, wobei das Reaktionsgefäß aufweist:
ein Gehäuse (10), das Seitenwände und ein transparentes Fenster (11) aufweist, wobei ein Hohlraum (12) zum Speichern einer Elektrolytlösung im Gehäuse (10) ausgebildet ist, wobei der Hohlraum durch die Seitenwände und das transparente Fenster (11) eingeschlossen ist; und
eine Arbeitselektrode (20), die aus einem leitfähigen Material aufgebaut ist, das mindestens ein Material aufweist, das aus einer Gruppe ausgewählt ist, die aus einem leitfähigen Kohlenstoffmaterial, einer leitfähigen Keramik, Gold und einem vergoldeten leitfähigen Material besteht, wobei die Arbeitselektrode (20) ein plattenförmiges Element ist,
das sich parallel zum transparenten Fenster (11) erstreckt, und die Arbeitselektrode (20) aufweist:
einen Teil (21), der zum transparenten Fenster (11) im Hohlraum (12) weist und konfiguriert ist, eine Probe zu halten, an der eine Raman-Spektralphotometrie in einer elektrochemischen Reaktion der Probe in der Elektrolytlösung durchgeführt wird; und
einen anderen Teil (22), der ein Endteil des plattenförmigen Elements ist, der eine Seitenwand des Gehäuses (10) durchdringt und sich parallel zum Fenster (11) zum Äußeren des Gehäuses (10) erstreckt, um mit einer externen Stromquelle verbunden zu werden.

2. Verwendung eines Reaktionsgefäßes nach Anspruch 1 zur mikroskopischen Raman-Spektralphotometrie in einem Raman-Spektralphotometriesystem, das das Reaktionsgefäß und Mittel zur Detektion einer Raman-Verschiebung aufweist, wobei das Reaktionsgefäß aufweist:
ein Gehäuse (10), das Seitenwände und ein transparentes Fenster (11) aufweist, wobei ein Hohlraum (12) zum Speichern einer Elektrolytlösung im Gehäuse (10) ausgebildet ist, wobei der Hohlraum durch die Seitenwände und das transparente Fenster (11) eingeschlossen ist; und
eine Arbeitselektrode (20), die aus einem leitfähigen Material aufgebaut ist, das mindestens ein Material aufweist, das aus einer Gruppe ausgewählt ist, die aus einem leitfähigen Kohlenstoffmaterial, einer leitfähigen Keramik, Gold und einem vergoldeten leitfähigen Material besteht, wobei die Arbeitselektrode (20) ein plattenförmiges Element ist,
das sich parallel zum transparenten Fenster (11) erstreckt, und die Arbeitselektrode (20) aufweist:
einen Teil (21), der zum transparenten Fenster (11) im Hohlraum (12) weist und konfiguriert ist, eine Probe zu halten, an der eine Raman-Spektralphotometrie in einer elektrochemischen Reaktion der Probe in der Elektrolytlösung durchgeführt wird; und
einen anderen Teil (22), der ein Endteil des plattenförmigen Elements ist, der eine Seitenwand des Gehäuses (10) durchdringt und sich parallel zum Fenster (11) zum Äußeren des Gehäuses (10) erstreckt, um mit einer externen Stromquelle verbunden zu werden.

3. Verfahren zur Raman-Spektralphotometrie, das aufweist:
Vorbereiten eines Reaktionsgefäßes, das aufweist:
ein Gehäuse (10), das Seitenwände und ein transparentes Fenster (11) aufweist, wobei ein Hohlraum (12) durch die Seitenwände und das transparente Fenster (11) eingeschlossen ist; und
eine Arbeitselektrode (20), die aus einem leitfähigen Material aufgebaut ist, das mindestens ein Material aufweist, das aus einer Gruppe ausgewählt ist, die aus einem leitfähigen Kohlenstoffmaterial, einer leitfähigen Keramik, Gold und einem vergoldeten leitfähigen Material besteht, wobei die Arbeitselektrode (20) ein plattenförmiges Element ist,
das sich parallel zum transparenten Fenster (11) erstreckt, und die Arbeitselektrode (20) einen Teil (21), der zum transparenten Fenster (11) im Hohlraum (12) weist und einen anderen Teil (22) aufweist, der ein Endteil des plattenförmigen Elements ist, der eine Seitenwand des Gehäuses durchdringt und sich parallel zum Fenster (11) zum Äußeren des Gehäuses (10) erstreckt;
Halten einer Probe auf dem einen Teil (21) der Arbeitselektrode (20), der zum transparenten Fenster (11) weist;
Verbinden des anderen Teils (22) der Arbeitselektrode (20), der sich zum Äußeren des Gehäuses (10) erstreckt, mit einer externen Stromquelle;
Speichern einer Elektrolytlösung im Hohlraum (12); und
Durchführen einer Raman-Spektralphotometrie in einer elektrochemischen Reaktion der Probe in der Elektrolytlösung.

4. Verfahren zur Raman-Spektralphotometrie nach Anspruch 3, wobei die Raman-Spektralphotometrie eine mikroskopische Raman-Spektralphotometrie ist.

5. Verfahren zur Raman-Spektralphotometrie nach Anspruch 4, wobei die mikroskopische Raman-Spektralphotometrie in einer Situation durchgeführt wird, wo das Reaktionsgefäß zwischen einer Linse zu Einstrahlen von Anregungslicht und einem Objekttisch angeordnet ist, der der Linse gegenüberliegt.

## Revendications

1. Système de spectrophotométrie Raman comprenant un récipient de réaction et un moyen de détection d'un décalage de Raman, ledit récipient de réaction comprenant :
un boîtier (10) avec des parois latérales et une fenêtre transparente (11), un espace creux (12) pour le stockage d'une solution d'électrolyte étant formé à l'intérieur du boîtier (10), ledit espace creux étant entouré par les parois latérales et la fenêtre transparente (11) ; et
une électrode de travail (20) constituée d'un matériau conducteur comprenant au moins un matériau sélectionné dans un groupe consistant en un matériau carbone conducteur, une céramique conductrice, de l'or, et un matériau conducteur plaqué or, ladite électrode de travail (20) étant un élément en forme de plaque s'étendant parallèlement à la fenêtre transparente (11), et ladite électrode de travail (20) présentant :
une partie (21) opposée à la fenêtre transparente (11) dans l'espace creux (12), et prévue pour maintenir un échantillon sur lequel est exécutée une spectrophotométrie Raman dans une réaction électrochimique de l'échantillon dans la solution d'électrolyte ; et
une autre partie (22) étant une partie d'extrémité de l'élément en forme de plaque, traversant une paroi latérale du boîtier (10) et s'étendant parallèlement à la fenêtre (11) vers l'extérieur du boîtier (10) pour être raccordée à une source de courant extérieure.

2. Utilisation d'un récipient de réaction selon la revendication 1 pour une microspectrophotométrie Raman dans un système de spectrophotométrie Raman comprenant le récipient de réaction et le moyen de détection d'un décalage de Raman, ledit récipient de réaction comprenant :
un boîtier (10) avec des parois latérales et une fenêtre transparente (11), un espace creux (12) pour le stockage d'une solution d'électrolyte étant formé à l'intérieur du boîtier (10), ledit espace creux étant entouré par les parois latérales et la fenêtre transparente (11) ; et
une électrode de travail (20) constituée d'un matériau conducteur comprenant au moins un matériau sélectionné dans un groupe consistant en un matériau carbone conducteur, une céramique conductrice, de l'or, et un matériau conducteur plaqué or, ladite électrode de travail (20) étant un élément en forme de plaque s'étendant parallèlement à la fenêtre transparente (11), et ladite électrode de travail (20) présentant :
une partie (21) opposée à la fenêtre transparente (11) dans l'espace creux (12), et prévue pour maintenir un échantillon sur lequel est exécutée une spectrophotométrie Raman dans une réaction électrochimique de l'échantillon dans la solution d'électrolyte ; et
une autre partie (22) étant une partie d'extrémité de l'élément en forme de plaque, traversant une paroi latérale du boîtier (10) et s'étendant parallèlement à la fenêtre (11) vers l'extérieur du boîtier (10) pour être raccordée à une source de courant extérieure.

3. Procédé de spectrophotométrie Raman, comprenant :
la préparation d'un récipient de réaction comprenant :
un boîtier (10) avec des parois latérales et une fenêtre transparente (11), un espace creux (12) étant entouré par les parois latérales et la fenêtre transparente (11) ; et
une électrode de travail (20) constituée d'un matériau conducteur comprenant au moins un matériau sélectionné dans un groupe consistant en un matériau carbone conducteur, une céramique conductrice, de l'or, et un matériau conducteur plaqué or, ladite électrode de travail (20) étant un élément en forme de plaque s'étendant parallèlement à la fenêtre transparente (11), et ladite électrode de travail (20) présentant une partie (21) opposée à la fenêtre transparente (11) dans l'espace creux (12), et une autre partie (22) étant une partie d'extrémité de l'élément en forme de plaque, traversant une paroi latérale du boîtier et s'étendant parallèlement à la fenêtre (11) vers l'extérieur du boîtier (10) ;
le maintien d'un échantillon sur la première partie (21) de l'électrode de travail (20) opposée à la fenêtre transparente (11) ;
le raccordement de l'autre partie (22) de l'électrode de travail (20) s'étendant vers l'extérieur du boîtier (10) à une source de courant extérieure ;
le stockage d'une solution d'électrolyte dans l'espace creux (12) ; et
l'exécution d'une spectrophotométrie Raman dans une réaction électrochimique de l'échantillon dans la solution d'électrolyte.

4. Procédé de spectrophotométrie Raman selon la revendication 3, où la spectrophotométrie Raman est une microspectrophotométrie Raman.

5. Procédé de spectrophotométrie Raman selon la revendication 4, où la microspectrophotométrie Raman est exécutée dans une situation où le récipient de réaction est disposé entre une lentille pour l'irradiation par une lumière d'excitation et une platine de microscope opposée à la lentille.
